(19) Europäisches Patentamt / European Patent Office / Office européen des brevets

(11) **EP 2 187 498 A1**

(12) **EUROPEAN PATENT APPLICATION**
published in accordance with Art. 153(4) EPC

(43) Date of publication:
**19.05.2010 Bulletin 2010/20**

(51) Int Cl.:
*H02J 7/02* (2006.01)          *H01M 10/44* (2006.01)
*H01M 16/00* (2006.01)

(21) Application number: **08764072.8**

(22) Date of filing: **10.06.2008**

(86) International application number:
**PCT/JP2008/001475**

(87) International publication number:
**WO 2009/031255 (12.03.2009 Gazette 2009/11)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.09.2007 JP 2007232333**

(71) Applicant: **Panasonic Corporation**
**Kadoma-shi**
**Osaka 571-8501 (JP)**

(72) Inventors:
• **SUGIYAMA, Shigeyuki**
  **Chuo-ku, Osaka-shi, Osaka 540-6207 (JP)**
• **AOKI, Mamoru**
  **Chuo-ku, Osaka-shi, Osaka 540-6207 (JP)**

(74) Representative: **Schwabe - Sandmair - Marx**
**Patentanwälte**
**Stuntzstraße 16**
**81677 München (DE)**

(54) **ASSEMBLED BATTERY AND BATTERY SYSTEM**

(57)    An assembled battery according to the present invention has an aqueous secondary battery and non-aqueous secondary batteries having an individual battery capacity smaller than that of the aqueous secondary battery. The non-aqueous secondary batteries and the aqueous secondary battery are connected in series such that the polarities thereof are reversed, and charging and discharging are carried out based on the polarities of the non-aqueous secondary batteries.

FIG.2

**Description**

Technical Field

The present invention relates to an assembled battery having a plurality of secondary batteries, and a battery system for charging and discharging the assembled battery.

Background Art

In the prior art, a lead storage battery for activating the power system or driving the electrical circuit or electrical equipment is installed in a two-wheeled vehicle, a three-wheeled vehicle, and a vehicle with four or more wheels. Although the lead storage battery is inexpensive, its mounting weight and volume are large due to its low storage energy density. Reducing the weight, volume, and size of the lead storage battery is required, from the perspective of fuel consumption and power performance of a vehicle. As a solution to this problem, a method of adopting a nickel-cadmium secondary battery, a nickel-hydrogen secondary battery, a lithium-ion secondary battery, a lithium polymer secondary battery, with a larger storage energy density is taken into consideration. In addition, an assembled battery having a combination of different types of batteries is proposed for solving various problems of an assembled battery configured by one type of battery (see Patent Document 1, for example).

When carrying out constant voltage charging, charging current flowing through a secondary battery is detected, while applying constant voltage to the secondary battery, and the charging is completed when the charging current becomes equal to or lower than a predetermined charging completion current value. However, when charging an aqueous secondary battery, such as a nickel-cadmium secondary battery or a nickel-hydrogen secondary battery, at constant voltage, the electromotive voltage of the cell decreases as a result of a temperature increase caused by an oxygen evolution, which is a side reaction generated when the battery is almost fully charged. Consequently, the charging current increases and does not drop to below the charging completion current value. Therefore, the constant voltage charging cannot be completed and the battery falls into an overcharge state due to the continued charging. As a result, liquid leakage occurs due to the overcharge of the battery, deteriorating the battery function. Thus, a vehicle having a charging circuit for a lead storage battery has a problem that the vehicle cannot be incorporated with an aqueous secondary battery in place of the lead storage battery.

Incidentally, when charging the lead storage battery, a constant current constant voltage (CCCV) charging system for carrying out constant voltage charging after constant current charging is used. When the constant voltage charging is carried out, charging current flowing through a secondary battery is detected, while applying constant voltage to the secondary battery, and the charging is completed when the charging current becomes equal to or lower than a predetermined charging completion current value.

However, when charging an aqueous secondary battery, such as a nickel-cadmium secondary battery or a nickel-hydrogen secondary battery, at constant voltage, the electromotive voltage of the cell decreases as a result of a temperature increase caused by an oxygen evolution, which is a side reaction generated when the battery is almost fully charged. Consequently, the charging current increases and does not drop to below the charging completion current value. Therefore, the constant voltage charging cannot be completed, and the battery falls into an overcharge state due to the continued charging. As a result, liquid leakage occurs due to the overcharge of the battery, deteriorating the battery function. Thus, a vehicle having a charging circuit for a lead storage battery has a problem that the vehicle cannot be incorporated with an aqueous secondary battery in place of the lead storage battery.

Further, a non-aqueous secondary battery, such as a lithium-ion secondary battery or a lithium polymer secondary battery, can be charged by the constant current constant voltage (CCCV) charging system, as with the lead storage battery. However, when a vehicle having a charging circuit for a lead storage battery is incorporated with such non-aqueous secondary battery in place of the lead storage battery, charging cannot be performed sufficiently, due to the difference in the charging voltage between the lead storage battery and the non-aqueous secondary battery.

For example, a lead storage battery having an output voltage of DC12 V is subjected to constant voltage charging at 14.5 V. Therefore, when a charging circuit for charging such lead storage battery is used for charging an assembled battery having a plurality of lithium-ion secondary batteries connected in series, charging voltage for each lithium-ion secondary battery is obtained by dividing 14.5 V by the number lithium-ion secondary batteries. For example, in the case of an assembled battery having three lithium-ion secondary batteries connected in series, charging voltage for each lithium-ion secondary battery is 14.5 V/3 = 4.83 V.

On the other hand, an open voltage of 4.2 V, which is obtained when the lithium-ion secondary batteries are in a full charge state, is used as the charging voltage for performing constant voltage charging on the lithium-ion secondary batteries. Therefore, disadvantages of using a charging circuit for a lead storage battery to charge the assembled battery having the three lithium-ion secondary batteries connected in series are characteristic degradation, failures, and safety problems that are all caused by overcharge with an excessively high charging voltage.

Furthermore, in an assembled battery having four lithium-ion secondary batteries connected in series, the charging voltage for each lithium-ion secondary battery is 14.5 V/4 = 3.63 V, which is too low compared to 4.2 V, and the state of charge (SOC) is only approximately 50% or lower. Therefore, it is difficult to effectively utilize the battery capacities of the secondary batteries.

In the technology described in Patent Document 1, by using the property of the aqueous secondary battery, which is the increasing heat generation of the aqueous secondary battery that is almost fully charged, it is determined that the aqueous secondary battery is fully charged by the temperature of the assembled battery having a combination of the aqueous secondary battery and a non-aqueous secondary battery. However, in the charging circuit for a lead storage battery or other charging circuit for constant voltage charging, it is determined based on the charging current that the battery is fully charged, and subsequently the charging is completed. Therefore, disadvantages of using the charging circuit for constant voltage charging to charge the assembled battery described in Patent Document 1 are characteristic degradation, failures, and safety problems that are all caused by overcharge performed without being able to complete the charging. Another disadvantage is that because the aqueous secondary battery generates heat when the aqueous secondary battery is almost fully charged, the non-aqueous secondary battery that is combined with the aqueous secondary battery is heated and consequently deteriorated.

Patent Document 1: Japanese Patent Application Publication No. H9-180768

Disclosure of the Invention

The present invention was contrived in view of the circumstances described above, and an object of the present invention is to provide an assembled battery that is capable of easily increasing the state of charge upon completion of charging, while lowering the risk of overcharge, even when the assembled battery is charged by a charging circuit for constant voltage charging, and to provide a battery system using this assembled battery.

An assembled battery according to one aspect of the present invention has an aqueous secondary battery and non-aqueous secondary batteries having an individual battery capacity smaller than that of the aqueous secondary battery, wherein the non-aqueous secondary batteries and the aqueous secondary battery are connected in series such that polarities thereof are reversed, and charging and discharging are carried out based on the polarities of the non-aqueous secondary batteries.

According to this configuration, when the assembled battery is subjected to constant voltage charging, the non-aqueous secondary battery is charged and the aqueous secondary battery is discharged. Because the current values for this charging and discharging are equal to each other, the non-aqueous secondary battery having a battery capacity smaller than that of the aqueous secondary battery is almost fully charged before the aqueous secondary battery is completely discharged. Consequently, charging of the assembled battery is completed without attenuating the charging current by having the voltage of the assembled battery itself reach a predetermined value (for example, a specified voltage of a constant voltage charger), or without excessively discharging the aqueous secondary battery or excessively charging the non-aqueous secondary battery.

When supposedly using a constant voltage charger with a rated voltage of 14.5 V that is used for a lead storage battery, the assembled battery is configured using three non-aqueous secondary batteries and two aqueous secondary batteries according to Patent Document 1, but the assembled battery is configured using four non-aqueous secondary batteries and one aqueous secondary battery according to the present invention. When comparing both assembled batteries, the assembled battery based on the present invention has the advantage that the more the non-aqueous secondary batteries with high energy density per unit weight are used, the more the weight of the assembled battery can be reduced.

Further, a battery system according to another aspect of the present invention is characterized in having the assembled battery having the configuration described above, and the charging circuit.

According to the configuration described above, with the assembled battery having the abovementioned configuration, the state of charge can be increased upon completion of charging, while lowering the risk of overcharge, when the assembled battery with the abovementioned configuration is subjected to constant voltage charging by the charging circuit.

The object, features and advantages of the present invention will become apparent from the following detailed description and the accompanying drawings.

Brief Description of the Drawings

[Fig. 1] Fig. 1 is a perspective view showing an example of the appearance of an assembled battery according to an embodiment of the present invention;

[Fig. 2] Fig. 2 is a schematic diagram showing an example of an electrical configuration of a battery system having the assembled battery shown in Fig. 1 and a charging circuit for charging the assembled battery;

[Fig. 3A] Fig. 3A is a diagram showing a charge/discharge behavior of a lithium-ion secondary battery used in the assembled battery of the present invention;

[Fig. 3B] Fig. 3B is a diagram showing a charge/discharge behavior of a nickel-hydrogen secondary battery used in the assembled battery of the present invention;

[Fig. 3C] Fig. 3C is a diagram showing a charge behavior of the assembled battery of the present invention; and

[Fig. 3D] Fig. 3D is a diagram showing a discharge behavior of the assembled battery of the present invention.

Best Mode for Carrying Out the Invention

The embodiment of the present invention are described hereinafter with reference to the drawings.

Note that like reference characters are used to indicate the same configurations in the drawings, thus the overlapping explanations are omitted accordingly.

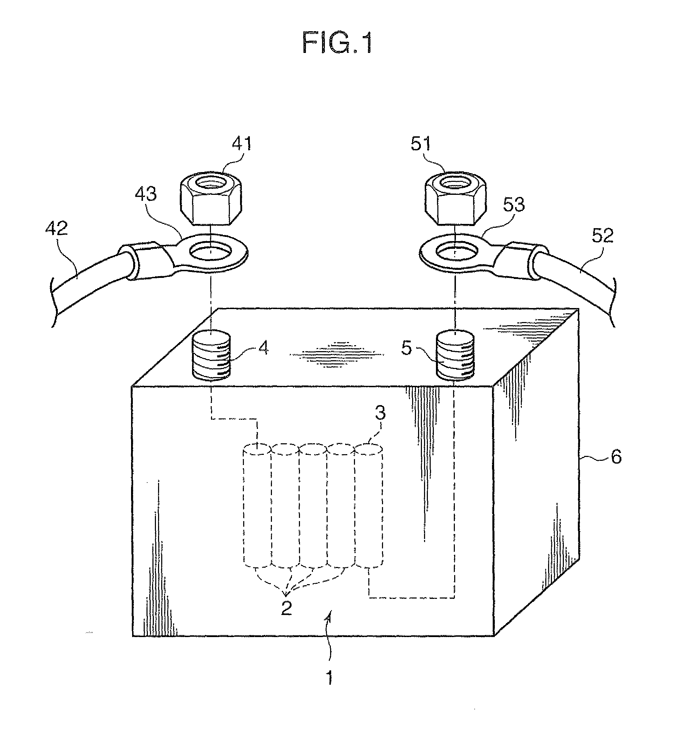

Fig. 1 is a perspective view showing an example of the appearance of an assembled battery according to an embodiment of the present invention. An assembled battery 1 shown in Fig. 1 is used as a battery for a vehicle, such as a two-wheeled vehicle, four-wheeled vehicle, and other construction vehicle. The assembled battery 1 shown in Fig. 1 is housed in a substantially box-shaped housing 6 and has four lithium-ion secondary batteries 2 and one nickel-hydrogen secondary battery 3 connected in series. Here, the negative electrode terminal of the nickel-hydrogen secondary battery 3 is connected in series to the negative electrode terminals of the adjacent lithium-ion secondary batteries 2.

On an upper surface of the housing 6, connecting terminals 4, 5 are provided in an upwardly projecting manner. The connecting terminal 4 is connected to the positive electrode terminal of the lithium-ion secondary battery 2 that is the furthest from the nickel-hydrogen secondary battery 3, and configures the positive electrode terminal of the assembled battery 1. The connecting terminal 5, on the other hand, is connected to the positive electrode terminal of the nickel-hydrogen secondary battery 3 and configures the negative electrode terminal of the assembled battery 1. Specifically, the polarities of the assembled battery 1 conform with the polarities of the lithium-ion secondary batteries 2, and the nickel-hydrogen secondary battery 3 is in reverse connection in relation to the polarities of the assembled battery 1.

In the example of Fig. 1, the connecting terminals 4, 5 are in the shape of a bolt, to which nuts 41, 51 can be screwed. On the other hand, a ring-shaped wire side terminal 43 that can be externally fitted to the connecting terminal 4 is secured to a terminal of an electric cable 42 to be connected to the connecting terminal 4, by means of a swage or other means. Similarly, a ring-shaped wire side terminal 53 that can be externally fitted to the connecting terminal 5 is secured to a terminal of an electric cable 52 to be connected to the connecting terminal 5, by means of a swage or other means. Then, the wire side terminals 43, 53 are externally fitted to the connecting terminal 4 and the connecting terminal 5 of the assembled battery 1, respectively, and the terminals of the electric cables 42, 52 are electrically connected to the connecting terminals 4, 5 by attaching and tightening the nuts 41, 51 against the connecting terminals 4, 5.

The electric cables 42, 52 are connected to an electrical circuit within a vehicle or a charging circuit charging the assembled battery 1, and is used for charging/discharging the assembled battery 1.

Note that the shape of the connecting terminals 4, 5 is not limited to the bolt shape and thus may be, for example, a cylindrical shape. Also, the wire side terminals 43, 53 may be obtained by, for example, bending conductive metallic plates at their central parts into a substantially C-shape. The central parts may be loosely fitted to the exteriors of the connecting terminals 4, 5, respectively, and thereafter both ends of the wire side terminals 43, 53 may be tightened by the bolts or the like to join the connecting terminals 4, 5 to the wire side terminals 43, 53, respectively. With such housing structure and terminal housing, the assembled battery 1 can be easily replaced with a lead storage battery. The assembled battery 1 is not necessarily housed in the housing 6 and does not necessarily have connecting terminals that can be connected directly to the wire side terminals 43, 53 for a lead battery. The connecting terminals 4, 5 may be, for example, terminal blocks, connectors, or electrode terminals of a cell.

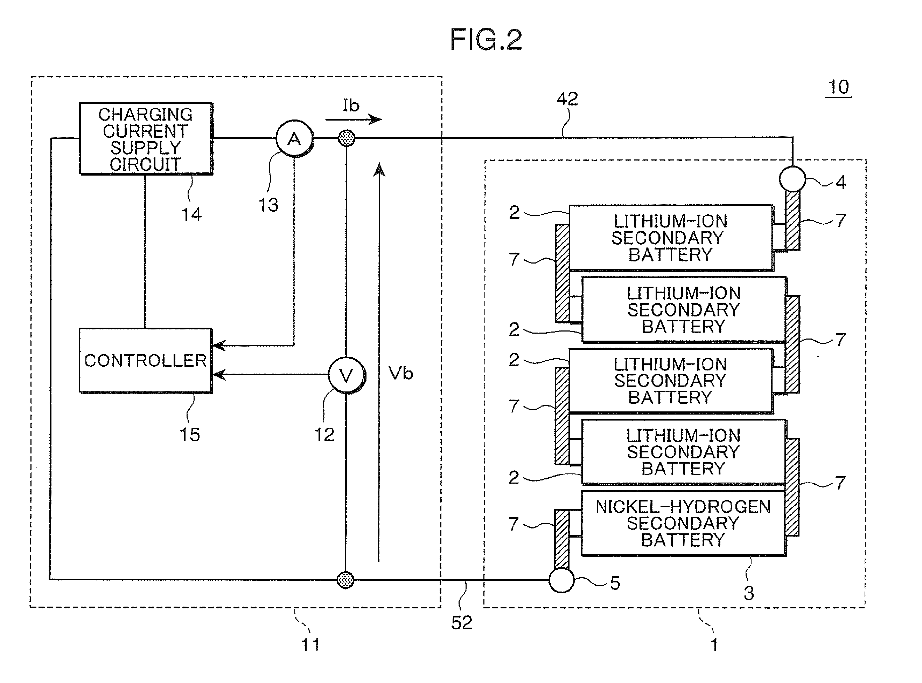

Fig. 2 is a schematic diagram showing an example of an electrical configuration of a battery system 10 having the assembled battery 1 shown in Fig. 1 and a charging circuit 11 for charging the assembled battery 1. The assembled battery 1 shown in Fig. 2 is configured such that the four lithium-ion secondary batteries 2 and the one nickel-hydrogen secondary battery 3 are connected in series by connecting plates 7. Here, the negative electrode terminal of the nickel-hydrogen secondary battery 3 is connected in series to the negative electrode terminals of the adjacent lithium-ion secondary batteries 2. The connecting terminal 4 is connected to the positive electrode terminal of the lithium-ion secondary battery 2 that is the furthest from the nickel-hydrogen secondary battery 3, and configures the positive electrode terminal of the assembled battery 1. The connecting terminal 5, on the other hand, is connected to the positive electrode terminal of the nickel-hydrogen secondary battery 3 and configures the negative electrode terminal of the assembled battery 1. Note in Figs. 1 and 2 that the batteries of the same type are disposed adjacent to one another, but the batteries of different types may be disposed anywhere.

Furthermore, the lithium-ion secondary batteries 2 each have a battery capacity smaller than that of the nickel-hydrogen secondary battery 3. Each of the lithium-ion secondary batteries 2 correspond to an example of the non-aqueous secondary battery, but another non-aqueous secondary batteries such as a lithium polymer secondary battery may be used in place of the lithium-ion secondary battery 2. The nickel-hydrogen secondary battery 3 corresponds to an example of the aqueous secondary battery, and another aqueous secondary battery such as a nickel-cadmium secondary battery may be used in place of the nickel-hydrogen secondary battery 3. However, due to the high energy density and lighter and compact properties of the assembled battery, a nickel-hydrogen secondary battery is suitable as the aqueous secondary battery, and a lithium-ion secondary battery is suitable as the non-aqueous secondary battery.

The charging circuit 11 is a charging circuit for charging, for example, a vehicular lead storage battery by means of constant current constant voltage (CCCV), and is configured by, for example, a vehicular ECU (Electric Control Unit) and the like. As shown in Fig. 2, the charging circuit 11 has, for example, a voltage sensor 12, a current sensor 13, a charging current supply circuit 14, and a controller 15.

The charging current supply circuit 14 is configured by a rectifier circuit that generates charging current and charging voltage for charging a lead storage battery from, for example, the electric power generated by a vehicle, a switching power supply circuit, and the like. The charging current supply circuit 14 is connected to the connecting terminals via the current sensor 13 and the electric cable 42 and to the connecting terminal 5 via the electric cable 52.

The voltage sensor 12 is configured using, for example, a partial pressure resistance, an A/D converter, or the like. The voltage sensor 12 detects the voltage between the connecting terminals 4, 5 through the electric cables 42, 52, that is, a charging voltage $Vb$ of the assembled battery 1, and then outputs the voltage value thereof to the controller 15. The current sensor 13 is configured using, for example, a shunt resistance, a hall element, an A/D converter, or the like. The current sensor 13 detects a charging current $Ib$ supplied from the charging current supply circuit 14 to the assembled battery 1, and then outputs the current value thereof to the controller 15.

The controller 15 is configured by, for example, a CPU (Central Processing Unit) that executes predetermined arithmetic processing, a ROM (Read Only Memory) that stores a predetermined control program therein, a RAM (Random Access Memory) that temporarily stores data therein, peripheral circuits around these components, and the like. The controller 15 is a control circuit that executes constant current constant voltage (CCCV) charging by executing the control program stored in the ROM and thereby controlling output current and output voltage of the charging current supply circuit 14 based on the charging voltage $Vb$ obtained from the voltage sensor 12 and the charging current $Ib$ obtained from the current sensor 13.

The charging voltage used for performing constant voltage charging on a lead storage battery is generally 14.5 V to 15.5 V. Therefore, when executing the constant voltage charging, the controller 15 controls the output current and voltage of the charging current supply circuit 14 so that the voltage detected by the voltage sensor 12 becomes 14.5 V to 15.5 V.

Incidentally, the open voltage of a lithium-ion secondary battery in a full charge state is approximately 4.2 V. When the lithium-ion secondary battery is charged, the potential of the positive electrode increases but the potential of the positive electrode decreases as the state of charge increases. The terminal voltage of the lithium-ion secondary battery is expressed as the difference between the potential of the positive electrode and the potential of the negative electrode. When the potential of the negative electrode decreases with an increase in the state of charge and becomes 0 V, the difference between the potential of the positive electrode and the potential of the negative electrode, that is, the potential of the positive electrode, is affected by the charging current value, temperature, and fluctuations in the compositions of the positive-electrode and negative-electrode active materials. However, it is known that the potential of the positive electrode becomes approximately 4.2 V when lithium cobaltate is used as the positive-electrode active material, and becomes approximately 4.3 V when lithium manganate is used as the positive-electrode active material. Therefore, the lithium-ion secondary battery can be fully charged (100% of state of charge), by using a terminal voltage of, for example, 4.2 V as the charging voltage for the constant voltage charging when the potential of the negative electrode becomes 0 V and consequently the lithium-ion secondary battery enters a full charge state.

On the other hand, the aqueous secondary battery has characteristics that the terminal voltage changes moderately with a change in the state of discharge. For example, in a nickel-hydrogen secondary battery, the closed circuit voltage is approximately 1.2 V when the nickel-hydrogen secondary battery is brought from a charge state to a discharge state.

In this manner, in the battery system 10, when, for example, the constant voltage charging is performed on the assembled battery 1 with a charging voltage $Vb$ of 14.5 V, the charging voltage of each lithium-ion secondary battery 2 becomes (14.5 V + 1.2 V)/4 = 3.925 V. Therefore, the charging voltage of the lithium-ion secondary batteries 2 can be increased from 3.63 V, which is the charging voltage of each of the four lithium-ion secondary batteries that are connected in series as described above.

Specifically, a differential voltage of 15.6 V, which is the difference between the voltage obtained by multiplying the open voltage of 4.2 V by 4 and the closed circuit voltage of 1.2 V obtained when the nickel-hydrogen secondary battery is discharged, makes a smaller difference with the charging voltage 14.5 V of the lead storage battery, than a voltage of 16.8 V, which is obtained by multiplying the open voltage of 4.2 V by 4, the open voltage being obtained when the lithium-ion secondary batteries are in a full charge state.

Moreover, the total voltage is at least 14.5 V, which is the charging voltage of the lead storage battery, and the charging voltage applied to each of the lithium-ion secondary batteries 2 becomes equal to or lower than 4.2 V when the charging voltage for the lead storage battery is applied between the connecting terminals 4, 5. As a result, the possibility of deterioration of the lithium-ion secondary batteries 2 can be reduced, and the risk of damaging the safety can be lowered.

Note that the output voltage of the lead storage battery is multiples of 12, such as 12 V, 24 V and 42 V, and the charging voltage of the charging circuit charging the lead storage battery is multiples of 14.5 V to 15.5 V. Therefore, when the assembled battery in which one nickel-hydrogen secondary battery and four lithium-ion secondary batteries with battery capacity lower than that of the nickel-hydrogen secondary battery are connected in series with the polarity of the nickel-hydrogen secondary battery reversed is taken as one unit (one unit), it is desirable that the ratio between the number of nickel-hydrogen secondary batteries and the number of lithium-ion secondary batteries be 1:4 by increasing/reducing the number of units in accordance with the charging voltage of the charging circuit. In this manner, as with the case where the output voltage of the lead storage battery is 12 V, the charging voltage of the assembled battery and the output voltage of the charging circuit can be conformed with each other so that, when the assembled battery 1 is charged by the charging circuit, the state of charge can be increased upon completion of charging.

With this unit as a basic unit having the above configuration, several units can be connected in series, in parallel or both in series and parallel to configure the assembled battery in accordance with the requests, such as the electromotive power or the battery capacity.

Next, the operation of the battery system 10 configured as described above is explained.

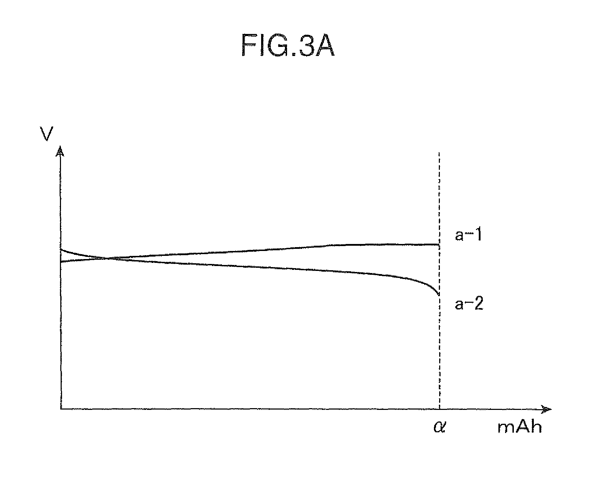

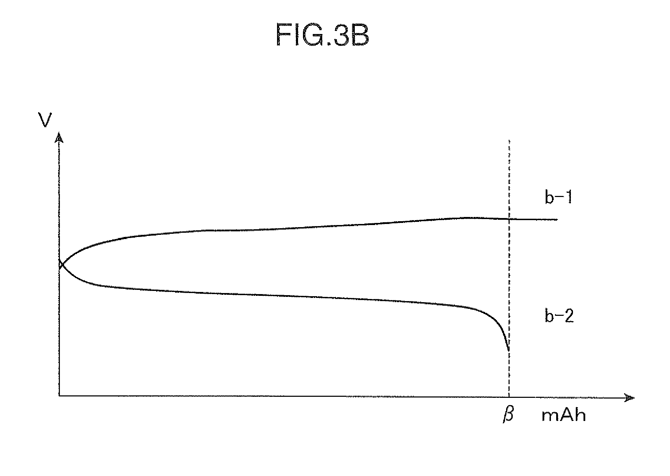

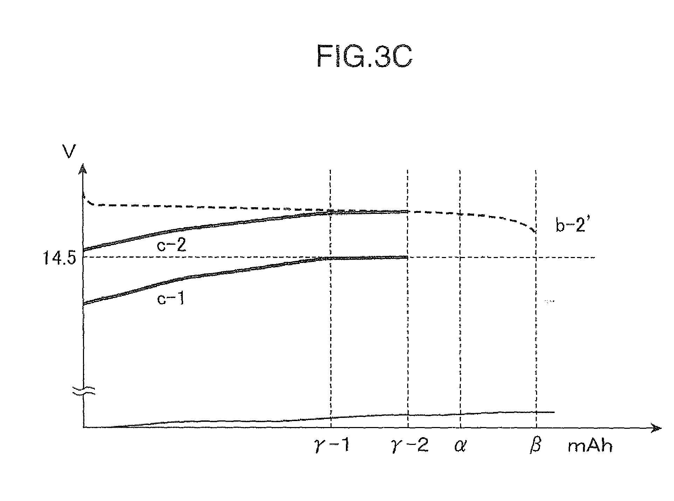

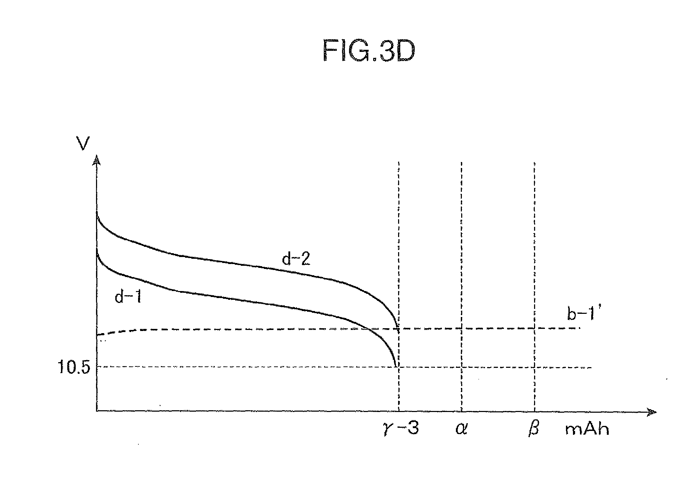

Fig. 3A is a diagram showing a charge/discharge behavior of the lithium-ion secondary batteries 2 used in the assembled battery 1 according to the embodiment of the present invention. Fig. 3B is a diagram showing a charge/discharge behavior of the nickel-hydrogen secondary battery 3 used in the assembled battery 1 according to the embodiment of the present invention. Fig. 3C is a diagram showing a charge behavior of the assembled battery 1 according to the embodiment of the present invention. Fig. 3D is a diagram showing a discharge behavior of the assembled battery 1 according to the embodiment of the present invention. Note in Fig. 3A to Fig. 3D that each horizontal axis represents the charge/discharge capacity, and each vertical axis represents the charging/discharging voltage of the assembled battery 1, the lithium-ion secondary batteries 2 or the nickel-hydrogen secondary battery 3. Curved lines a-1 and a-2 represent the terminal voltages obtained when charging and discharging the lithium-ion secondary batteries 2. Curved lines b-1 and b-2 represent the terminal voltages obtained when charging and discharging the nickel-hydrogen secondary battery 3. In the assembled battery 1, the one nicker-hydrogen secondary battery 3 is reversely connected to the four lithium-ion secondary batteries 2. Further, the assembled battery 1 is charged by the charging circuit 11 having a charger with a rated voltage of 14.5 V, and is configured such that discharge is ended when the voltage reaches 10.5 V as a result of control performed by the equipment.

As shown in Figs. 3A and 3B, the assembled battery 1 according to the present embodiment is configured such that the charge/discharge capacity $\beta$ of the nickel-hydrogen secondary battery 3 is greater than the charge/discharge capacity $\alpha$ of each lithium-ion secondary battery 2. In addition, the lithium-ion secondary batteries 2 and the nickel-hydrogen secondary battery 3 are connected in series so that the polarities of these secondary batteries are reversed, and the assembled battery 1 is charged/discharged based on the polarities of the lithium-ion secondary batteries 2. As a result, unique charge/discharge behaviors shown in Figs. 3C and 3D are obtained.

Charging of the assembled battery 1 is described in detail with reference to Fig. 3C. The curved line c-1 represents the voltage between the connecting terminals 4, 5, that is, the charging voltage (differential voltage) Vb of the assembled battery 1. First, in response to a control signal from the controller 15, a charging current Ib of 1.5A is output from the charging current supply circuit 14 to the assembled battery 1 via the electric cable 42, whereby the lithium-ion secondary batteries 2 are subjected to constant current charging, while the nickel-hydrogen secondary battery 3 is subjected to constant current discharging. Consequently, the differential voltage Vb rises and the assembled battery 1 is subjected to constant current charging.

Here, the terminal voltage of the nickel-hydrogen secondary battery 3 gradually decreases as the charging of the assembled battery 1 continues. On the other hand, the terminal voltage of the lithium-ion secondary batteries increases along the rising curve as a result of the charging. At this moment, the differential voltage Vb increases as the terminal voltage of the lithium-ion secondary batteries increases. On the other hand, the nickel-hydrogen secondary voltage is gradually discharged and the voltage thereof decreases as the state of charge of the assembled battery increases.

Specifically, the polarities of the assembled battery 1 are the same as those of the lithium-ion secondary batteries 2, and the four lithium-ion secondary batteries 2 and the one nickel-hydrogen secondary battery 3 are connected in series such that the polarities thereof are reversed. Thus, the constant current charging is continued up to a capacity $\gamma$-1 at which the sum c-2 of the charging voltages of the four lithium-ion secondary batteries 2 reaches the sum b-2' of the discharging voltages of the charger and the nickel-hydrogen secondary battery 3.

Then, the differential voltage Vb detected by the voltage sensor 12 reaches 14.5 V ($\gamma$-1), [the charge mode] is switched from the constant current charging to the constant voltage charging by the controller 15. Then, in response to the control signal from the controller 15, the charging current supply circuit 14 executes the constant voltage charging by applying a constant voltage of 14.5 V between the connecting terminals 4, 5.

As a result, as the state of charge of the lithium-ion secondary batteries 2 increases by the constant voltage charging, the charging current decreases. Then, the charging current detected by the current sensor 13 falls below a charging completion current that is set beforehand as a condition for completing the constant voltage charging, the controller 15 determines that the lithium-ion secondary batteries 2 are charged up to a state of charge that is near the maximum state of charge at which the charging can be performed at a constant voltage of 14.5 V. Then, in response to the control signal from the controller 15, the output current of the charging current supply circuit 14 becomes zero, whereby the charging is completed ($\gamma$-2). The reason of such behavior is because the charge/discharge capacity $\beta$ of the nickel-hydrogen secondary battery 3 is greater than the charge/discharge capacity $\alpha$ of each lithium-ion secondary battery 2. Because the nickel-hydrogen secondary battery 3 shows a relatively flat voltage in the middle of the discharge, the lithium-ion secondary batteries 2 can be subjected to the constant voltage charging from $\gamma$-1 at which the sum c-2 of the charging voltages of the four lithium-ion secondary batteries 2 reaches the sum b-2' of the discharge voltages of the charger and the nickel-hydrogen secondary battery 3, to $\gamma$-2 at which the charging is completed.

Because $\gamma$-2 is sufficiently lower than the charge/discharge capacity $\alpha$ of each lithium-ion secondary batteries 2, the lithium-ion secondary batteries 2 are prevented from being overcharged. In addition, because $\gamma$-2 is sufficiently lower than the charge/discharge capacity $\beta$ of the nickel-hydrogen secondary battery 3, the nickel-hydrogen secondary battery 3 is prevented from being overcharged.

Here, by intentionally reducing the large current discharge characteristics of the nickel-hydrogen secondary battery 3, the lithium-ion secondary batteries 2 can be inhibited from being charged, even in a charger, such as a generator of a vehicle, where there is a possibility that an incoming current increases at the time of charging. Specifically, the reversely connected nickel-hydrogen secondary battery 3 is not suitably configured to be subjected to large current discharge when the assembled battery 1 is charged with a large current. For this reason, the discharging voltage of the nickel-hydrogen secondary battery 3 decreases, and so does the sum b-2' of the discharging voltages of the charger and the nickel-hydrogen secondary battery 3. Accordingly, $\gamma$-1 and $\gamma$-2 at which the charging is completed are accelerated (as a result of the reduction in the charge capacity), and the voltages of the lithium-ion secondary batteries 2 are prevented from rising, which is a preferable aspect from a safety standpoint.

In Fig. 3D, the curved line d-1 represents the voltage between the connecting terminals 4, 5, that is, the discharging voltage of the assembled battery 1. The polarities of the assembled battery 1 are the same as those of the lithium-ion secondary batteries 2, and the four lithium-ion secondary batteries 2 and the one nickel-hydrogen secondary battery 3 are connected in series such that the polarities thereof are reversed. Thus, the discharging is continued up to a capacity $\gamma$-3 at which the sum d-2 of the charging voltages of the four lithium-ion secondary batteries 2 reaches the sum b-1' of the control voltage of the equipment and the charging voltage of the nickel-hydrogen secondary battery 3. Here, because $\gamma$-3 is sufficiently lower than the charge/discharge capacity $\alpha$ of each lithium-ion secondary battery 2, the lithium-ion secondary batteries 2 are prevented from being overcharged. In addition, because $\gamma$-3 is sufficiently lower than the charge/discharge capacity $\beta$ of the nickel-hydrogen secondary battery 3, the nickel-hydrogen secondary battery 3 is prevented from being overcharged.

Here, by intentionally reducing the large current charge characteristics of the nickel-hydrogen secondary battery 3, the lithium-ion secondary batteries 2 can be inhibited from being discharged, even when the equipment of the vehicle are used simultaneously and thereby the discharging current is increased. Specifically, the reversely connected nickel-hydrogen secondary battery 3 is not suitably configured to be subjected to large current charge when the assembled battery 1 is discharged with a large current. For this reason, the charging voltage rises, and so does the sum b-1' of the control voltage of the equipment and the charging voltage of the nickel-hydrogen secondary battery 3. Accordingly, $\gamma$-3 at which the discharging is completed is accelerated (as a result of the reduction in the discharge capacity), and the lithium-ion secondary batteries 2 are prevented from overcharged, which is a preferable aspect from a durability standpoint.

Incidentally, it is known that the self-discharging current of a nickel-hydrogen secondary battery is greater than that of a lithium-ion secondary battery. Thus, when the assembled battery 1 is left to stand after being charged, the remaining capacity of the nickel-hydrogen secondary battery 3 becomes lower than the remaining capacity of each lithium-ion secondary battery 2. Then, when charging of the assembled battery 1 is started while the remaining capacity of the nickel-hydrogen secondary battery 3 is lower than the remaining capacity of each lithium-ion secondary battery 2, the nickel-hydrogen secondary battery 3 is discharged upon completion of the charging. As a result, the charging is stopped before the lithium-ion secondary batteries 2 is fully charged.

However, the self-discharging speed relies on the battery voltage and is generally small in a discharge state than a charge state. Because the assembled battery 1 connected to a generator of a vehicle is always in a charge state, the reversely connected nickel-hydrogen secondary battery 3 is always in a discharge state. For this reason, the self-discharging speed of the nickel-hydrogen secondary battery 3 tends to decrease by itself. Moreover, because the polarities of the nickel-hydrogen secondary battery 3 are connected in the reverse direction, the voltage of the assembled battery 1 itself rises even if the nickel-hydrogen secondary battery 3 self-discharges and thereby the voltage thereof increases. Therefore, the assembled battery 1 has good keeping quality.

Note that the charging circuit 11 according to the present embodiment is not limited to the charging circuit for a lead storage battery. In addition, by appropriately setting the number of lithium-ion secondary batteries 2 and of the nickel-hydrogen secondary battery 3, the assembled battery 1 can be applied to an assembled battery that is charged by a charging circuit performing constant voltage charging with arbitrary charging.

Examples

Assembled batteries of Examples 1 to 3 and Comparative Example 2 described hereinafter were created by using CGR18650CF (with a battery capacity of 2.25 Ah) of Panasonic Corporation as a non-aqueous secondary battery and HHR330APH (with a battery capacity of 3.3 Ah) of Panasonic Corporation as an aqueous secondary battery. In Comparative Example 1, LC-P122R2J (with a battery capacity of 2.2 Ah) of Panasonic Corporation was used as a lead storage battery.

(Example 1)

Four cells of the CGR18650CF (with a battery capacity of 2.25 Ah) and one cell of the HHR330APH (with a battery capacity of 3.3 Ah), the total of five cells, were connected to each other in series, with only the HHR330APH connected reversely, and consequently the assembled battery of Example 1 was obtained.

(Comparative Example 1)

One cell of the LC-P122R2J (with a battery capacity of 2.2 Ah) was obtained as the assembled battery of Comparative Example 1.

(Comparative Example 2)

Four cells of the CGR18650CF (with a battery capacity of 2.25 Ah) were connected in series to obtain the assembled battery of Comparative Example 2.

The assembled batteries of Example 1 and Comparative Examples 1, 2 were subjected to constant current constant voltage charging with a charging current of 1 A for constant current charging, a charging voltage of 14.5 V for constant voltage charging, and a charging completion current of 0.1 A. Thereafter, the battery energy density per volume and the battery energy density per weight were measured when the assembled batteries were discharged up to 10 V with a constant current of 1 A. In addition, the battery energy density per volume and the battery energy density per weight were measured after the abovementioned charging/discharge was repeated three hundred times. The results of the measurement are shown in Table 1.

[Table 1]

|  | Initial stage | | After 300 cycles | |
|---|---|---|---|---|
|  | Volume energy density [Wh/l] | Weight energy density [Wh/kg] | Volume energy density [Wh/l] | Weight energy density [Wh/kg] |
| Example 1 | 221 | 109 | 155 | 76 |
| Comparative Example 1 | 73 | 33 | 51 | 23 |
| Comparative Example 2 | 108 | 55 | 102 | 52 |

As shown in Table 1, in the assembled battery of Example 1 of the present invention in which the aqueous secondary battery and the non-aqueous secondary battery with a battery capacity smaller than that of the aqueous secondary battery are combined, the battery energy density per volume and the battery energy density per weight are sufficiently larger than those of the lead storage battery of Comparative Example 1 and the assembled battery of Comparative Example 2, and therefore the assembled battery of Example 1 can be reduced in weight and size. In addition, in the assembled battery of Example 1 of the present invention, the battery energy density per volume and the battery energy density per weight after the three hundred cycles are sufficiently larger than those of the batteries of Comparative Examples 1, 2. Therefore, it is clear that the risk of deterioration caused by the repeated use of the battery can be reduced.

Note that the specific embodiment described above mainly contains the invention having the following configurations.

The assembled battery according to one aspect of the present invention has an aqueous secondary battery and a non-aqueous secondary battery having an individual battery capacity smaller than that of the aqueous secondary battery, wherein the non-aqueous secondary batteries and the aqueous secondary battery are connected in series such that polarities thereof are reversed, and charging and discharging are carried out based on the polarities of the non-aqueous secondary batteries.

According to this configuration, when the assembled battery is subjected to constant voltage charging, the non-aqueous secondary battery is charged and the aqueous secondary battery is discharged. Because the current values for this charging and discharging are equal to each other, the non-aqueous secondary battery having a battery capacity smaller than that of the aqueous secondary battery is almost fully charged before the aqueous secondary battery is completely discharged. Consequently, charging of the assembled battery is completed without attenuating the charging current by having the voltage of the assembled battery itself reach a predetermined value (for example, a specified voltage of a constant voltage charger), or without excessively discharging the aqueous secondary battery or excessively charging the non-aqueous secondary battery.

When supposedly using a constant voltage charger with a rated voltage of 14.5 V that is used for a lead storage battery, the assembled battery is configured using three non-aqueous secondary batteries and two aqueous secondary batteries according to Patent Document 1, but the assembled battery is configured using four non-aqueous secondary batteries and one aqueous secondary battery according to the present invention. When comparing both assembled batteries, the assembled battery based on the present invention has the advantage that the more the non-aqueous secondary batteries with high energy density per unit weight are used, the more the weight of the assembled battery can be reduced.

In the configuration described above, both ends of a series circuit in which the aqueous secondary battery and the non-aqueous secondary batteries are connected in series are provided with connecting terminals for receiving the charging voltage from the charging circuit that performs constant voltage charging for outputting a predetermined constant charging voltage. It is preferred that the differential voltage Vb obtained by Equation (1) below make a smaller difference with the charging voltage than the voltage closest to the charging voltage, out of the voltages obtained by integrally multiplying the terminal voltage $V_1$ when the non-aqueous secondary batteries are in a full charge state.

$$Vb = V_1 n_1 - V_2 n_2 \qquad \dots (1)$$

(In Equation (1), $V_1 n_1$ is the voltage obtained by multiplying the terminal voltage $V_1$ by the number $n_1$ of the non-aqueous secondary batteries included in the series circuit, the terminal voltage $V_1$ being obtained when the non-aqueous secondary batteries are in a full charge state. $V_2 n_2$ is the voltage obtained by multiplying the terminal voltage $V_2$ by the number $n_2$ of the aqueous secondary batteries included in the series circuit, the terminal voltage $V_2$ being obtained when the aqueous secondary batteries are in a discharge state.)

According to this configuration, of the voltages obtained by integrally multiplying the terminal voltage when the non-aqueous secondary batteries are in a full charge state, the differential voltage $Vb = V_1 n_1 - V_2 n_2$ (the difference between the charging voltage fundamentally required for fully charging the assembled battery and the charging voltage supplied by the charging circuit) is smaller than the voltage closest to the charging voltage supplied by the charging circuit. Therefore, when the assembled battery is subjected to constant voltage charging by the charging circuit, the assembled battery can be charged to a voltage at which the assembled battery is almost fully charged, unlike when an assembled battery configured only by a non-aqueous secondary battery is subjected to constant voltage charging by the charging circuit. Specifically, according to the configuration described above, the state of charge obtained upon completion of the charging can be increased.

In addition, the differential voltage $Vb = V_1 n_1 - V_2 n_2$ is set at the charging voltage or higher, and preferably makes a smaller difference with the charging voltage than the voltage that is equal to or higher than the charging voltage and is closest to the charging voltage, out of the voltages obtained by integrally multiplying the terminal voltages obtained when the non-aqueous secondary batteries are in a full charge state.

According to this configuration, the differentia voltage $Vb = V_1 n_1 - V_2 n_2$, that is, the charging voltage fundamentally required for fully charging the assembled battery, is equal to or higher than the charging voltage supplied by the charging circuit. Therefore, when the assembled battery is subjected to constant voltage charging by the charging circuit, the risk of application of excessive voltage to the assembled battery can be reduced.

Further, it is preferred that the charging circuit be a charging circuit for a lead storage battery, and that the ratio between the number of the aqueous secondary batteries and the number of the non-aqueous secondary batteries be 1:4.

According to this configuration, the difference between the charging voltage supplied by the charging circuit for a lead storage battery and the charging voltage required for fully charging the assembled battery can be reduced, and the state of charge upon completion of the charging can be increased.

It is also preferred that the aqueous secondary battery be a nickel-hydrogen secondary battery. Because the nickel-hydrogen secondary battery has a higher energy density among aqueous secondary batteries, the assembled battery can be reduced in weight and size.

It is also preferred that the non-aqueous secondary battery by a lithium-ion secondary battery. Because the lithium-ion secondary battery has a higher energy density among non-aqueous secondary batteries, the assembled battery can be reduced in weight and size.

In the configuration described above, when the assembled battery is charged, the voltage of the nickel-hydrogen secondary battery is at least 1.0 V but no more than 1.2 V, and the voltage of the lithium-ion secondary battery is at least 3.9 V but no more than 4.1 V. When the assembled battery is discharged, the voltage of the nickel-hydrogen secondary battery is at least 1.3 V but no more than 1.5 V, and the voltage of the lithium-ion secondary battery is 3.7 V or lower. As a result, the nickel-hydrogen secondary battery can be prevented from being excessively discharged or charged.

In the configuration described above, it is preferred that the large current discharge characteristics of the nickel-hydrogen secondary battery are set to be lower than the large current discharge characteristics of the lithium-ion secondary battery.

According to the configuration described above, even in a charger, such as a generator of a vehicle, where there is a possibility that an incoming current increases at the time of charging, the lithium-ion secondary battery can be inhibited from being charged. Specifically, because the reversely connected nickel-hydrogen secondary battery is not suitably configured to be subjected to large current charge when the assembled battery is discharged with a large current, the discharging voltage decreases. Thus, the charging completion voltage of the lithium-ion secondary battery that is represented by the sum of the rated voltage of the charger and the discharging voltage of the nickel-hydrogen secondary battery is reduced. As a result, the voltage of the lithium-ion secondary battery can be prevented from rising, which is a preferable aspect from a safety standpoint.

The battery system according to another aspect of the present invention is characterized in having the assembled battery having the configuration described above, and the charging circuit.

According to the configuration described above, with the assembled battery having the abovementioned configuration, the state of charge can be increased easily upon completion of charging, while lowering the risk of overcharge, when the assembled battery with the abovementioned configuration is subjected to constant voltage charging by the charging circuit.

As described above, the assembled battery of the present invention can provide an assembled battery that can be easily installed in a vehicle without changing a charging circuit in place of, for example, a lead storage battery, and that is light and small and is not deteriorated by the repeated use of the assembled battery.

Note that the present invention is based on the configuration in which all of the batteries are connected in series, but even when a unit A having a plurality of lithium-ion secondary batteries connected in parallel and a unit B having a plurality of nickel-hydrogen secondary batteries connected in parallel are connected in series such that the capacity of the unit B is larger than that of the unit A, needless to say, such a configuration can be equivalent to that of the present application.

Industrial Applicability

The present invention can be suitably utilized as an assembled battery that is used as a battery for a vehicle, such as a two-wheeled vehicle, four-wheeled vehicle, and other construction vehicle. The present invention can also be suitably utilized as an assembled battery that is used as a backup power supply of UPS, or a power supply of a portable personal computer, a digital camera, a cellular phone, or other electronic devices, as well as vehicles such as an electric vehicle and a hybrid car. The present invention is also suitable as a battery system using such an assembled battery.

**Claims**

1. An assembled battery, comprising:

an aqueous secondary battery; and

non-aqueous secondary batteries having an individual battery capacity smaller than that of the aqueous secondary battery,

wherein the non-aqueous secondary batteries and the aqueous secondary battery are connected in series such that polarities thereof are reversed, and charging and discharging are carried out based on the polarities of the non-aqueous secondary batteries.

2. The assembled battery according to claim 1,

wherein both ends of a series circuit in which the aqueous secondary battery and the non-aqueous secondary batteries are connected in series are provided with connecting terminals for receiving charging voltage from a charging circuit that performs constant voltage charging for outputting a predetermined constant charging voltage, and

wherein a differential voltage Vb obtained by Equation (1) below makes a smaller difference with the charging voltage than a voltage closest to the charging voltage, out of voltages obtained by integrally multiplying a terminal voltage $V_1$ when the non-aqueous secondary batteries are in a full charge state,

$$Vb = V_1 n_1 - V_2 n_2 \qquad \dots (1)$$

(in Equation (1), $V_1 n_1$ is the voltage obtained by multiplying the terminal voltage $V_1$ by the number $n_1$ of the non-aqueous secondary batteries included in the series circuit, the terminal voltage $V_1$ being obtained when the non-aqueous secondary batteries are in a full charge state, while $V_2 n_2$ is the voltage obtained by multiplying a terminal voltage $V_2$ by the number $n_2$ of the aqueous secondary batteries included in the series circuit, the terminal voltage $V_2$ being obtained when the aqueous secondary batteries are in a discharge state).

3. The assembled battery according to claim 2, wherein the differential voltage $Vb = V_1 n_1 - V_2 n_2$ is set at the charging voltage or higher, and makes a smaller difference with the charging voltage than the voltage that is equal to or higher than the charging voltage and is closest to the charging voltage, out of the voltages obtained by integrally multiplying the terminal voltage obtained when the non-aqueous secondary batteries are in a full charge state.

4. The assembled battery according to claim 2 or 3, wherein the charging circuit is a charging circuit for a lead storage battery, and the ratio between the number of the aqueous secondary batteries and the number of the non-aqueous secondary batteries is 1:4.

5. The assembled battery according to claim 4, wherein a unit configured by one aqueous secondary battery and four non-aqueous secondary batteries is taken as a basic unit, and a plurality of the units are connected in series, in parallel or both in series and parallel.

6. The assembled battery according to any one of claims 1 to 5, wherein large current discharge characteristics of the aqueous secondary battery are set to be lower than large current discharge characteristics of the non-aqueous secondary batteries.

7. The assembled battery according to any one of claims 1 to 6, wherein the aqueous secondary battery is a nickel-hydrogen secondary battery.

8. The assembled battery according to any one of claims 1 to 7, wherein the non-aqueous secondary batteries are each a lithium-ion secondary battery.

9. A battery system, comprising the assembled battery described in any one of claims 2 to 8, and the charging circuit.

# FIG.1

# FIG.2

EP 2 187 498 A1

# FIG.3A

## FIG.3B

FIG.3C

# FIG.3D

**INTERNATIONAL SEARCH REPORT**

| International application No. |
| --- |
| PCT/JP2008/001475 |

A.    CLASSIFICATION OF SUBJECT MATTER
*H02J7/02*(2006.01)i,  *H01M10/44*(2006.01)i,  *H01M16/00*(2006.01)i

According to International Patent Classification (IPC) or to both national classification and IPC

B.    FIELDS SEARCHED

Minimum documentation searched (classification system followed by classification symbols)
H02J7/02, H01M10/44, H01M16/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| A | JP 2005-160233 A  (Makita Corp.), 16 June, 2005 (16.06.05), Par. Nos. [0004] to [0010]; Fig. 1 & US 2005/0112416 A1    & EP 1536540 A2 | 1-9 |
| A | JP 2004-342580 A  (Makita Corp.), 02 December, 2004 (02.12.04), Par. Nos. [0011] to [0017]; Fig. 1 & WO 2004/095611 A1 | 1-9 |
| A | JP 2002-42764 A  (Shin-Kobe Electric Machinery Co., Ltd.), 08 February, 2002 (08.02.02), Par. Nos. [0005], [0006]; Fig. 2 & US 6366055 B1          & EP 1138554 A2 | 1-9 |

| ☒  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 July, 2008 (03.07.08) | 15 July, 2008 (15.07.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

18

## INTERNATIONAL SEARCH REPORT

| International application No. |
| --- |
| PCT/JP2008/001475 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 9-180763 A  (Sanyo Electric Co., Ltd.), 11 July, 1997 (11.07.97), Par. Nos. [0017] to [0023]; Fig. 2 (Family: none) | 1-9 |
| A | JP 3349321 B2  (Sanyo Electric Co., Ltd.), 25 November, 2002 (25.11.02), Claim 1 (Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9180768 B